(19) Europäisches Patentamt
European Patent Office
Office européen des brevets

(11) **EP 4 538 699 A1**

(12) **EUROPEAN PATENT APPLICATION**

(43) Date of publication:
**16.04.2025 Bulletin 2025/16**

(21) Application number: **24206012.7**

(22) Date of filing: **11.10.2024**

(51) International Patent Classification (IPC):
***G01N 30/88*** (2006.01)

(52) Cooperative Patent Classification (CPC):
**G01N 30/88; G01N 2030/8804**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.10.2023 JP 2023177450**

(71) Applicant: **SHIMADZU CORPORATION**
**Kyoto-shi, Kyoto 604-8511 (JP)**

(72) Inventor: **NAKAGAWA, Yuki**
**Kyoto-shi, Kyoto (JP)**

(74) Representative: **Müller-Boré & Partner**
**Patentanwälte PartG mbB**
**Friedenheimer Brücke 21**
**80639 München (DE)**

(54) **CALCULATION METHOD, STORAGE MEDIUM, COMPUTER PROGRAM PRODUCT AND ANALYSIS DEVICE FOR COST PERFORMANCE IN LIQUID CHROMATOGRAPH**

(57) A calculation method includes the steps of: calculating a third period (N10) shortened during a second period when a second cleaning solution is used in place of a first cleaning solution in a liquid chromatograph (100) capable of batch analysis, based on an analysis time required for one-time analysis (N1) when the first cleaning solution is used, a cleaning time required for one-time cleaning (N2), the number of calibrations per batch (N3), the number of samples analyzed per batch (N4), the number of batches analyzed during the first period (N5), and a reanalysis rate that requires a reanalysis to confirm whether carryover has occurred (N6); and calculating a second profit (N20) obtained during the second period when the second cleaning solution is used instead of the first cleaning solution, based on the third period (N10), the number of samples analyzed per batch (N4), the number of batches analyzed during the first period (N5), and a first profit obtained per one-time analysis (N7).

## FIG. 2

**Description**

**CROSS-REFERENCE TO RELATED APPLICATIONS**

This application claims priority under 35 U.S.C. §119 to Japanese Patent Application No. 2023-177450 filed on October 13, 2023.

**BACKGROUND OF THE INVENTION**

**Field of the Invention**

The following description sets forth the inventor's knowledge of the related art and problems therein and should not be construed as an admission of knowledge in the prior art.

For accurate analysis using a liquid chromatograph, it is important to reduce carryover in which a part of the sample used in the previous analysis remains in the system.

In Japanese Unexamined Patent Application Publication No. 2023-44723, a technique is disclosed for reducing carryover by cleaning a flow path with a cleaning solution having a composition different from that of a separation solution used for sample separation, thereby efficiently reducing the carryover and shortening the time required to reduce carryover.

However, Japanese Unexamined Patent Application Publication No. 2023-44723 does not disclose a method for estimating how much profit is expected from the reduction of carryover when the cleaning solution is purchased and used for a predetermined period. Thus, it is not easy for the user to determine whether the cleaning solution should be introduced. In view of the above-described circumstances, a method for providing information on the cost performance of a cleaning solution for a liquid chromatograph has been desired.

**SUMMARY OF THE INVENTION**

The preferred embodiments of the present disclosure have been developed in view of the above-mentioned and/or other problems in the related art. The preferred embodiments of the present disclosure can significantly improve upon existing methods and/or apparatuses.

The present disclosure has been conceived in view of these circumstances, and its purpose is to provide a calculation method, a storage medium, and an analysis device that can provide information on cost performance of a cleaning solution for a liquid chromatograph.

A calculation method for cost performance in a liquid chromatograph according to one aspect of the present disclosure, comprises:

a step of calculating a third period shortened during a second period in a case where a second cleaning solution is used in place of a first cleaning solution, based on an analysis time required for one-time analysis in a case where the first cleaning solution is used in a liquid chromatograph capable of batch analysis, a cleaning time required for one-time cleaning of the liquid chromatograph, the number of calibrations per batch, the number of samples analyzed per batch, the number of batches analyzed during a first period, and a reanalysis rate that requires a reanalysis to confirm whether carryover has occurred; and

a step of calculating a second profit obtained during the second period in a case where the second cleaning solution is used instead of the first cleaning solution, based on the third period, the number of samples analyzed per batch, the number of batches analyzed during the first period, and a first profit obtained per one-time analysis.

An analysis device according to another aspect of the present disclosure comprises:

a processor; and
a memory,
wherein the processor is configured to
calculate a third period shortened during a second period in a case where a second cleaning solution is used in place of a first cleaning solution, based on an analysis time required for one-time analysis in a case where the first cleaning solution is used, in a liquid chromatograph capable of batch analysis, a cleaning time required for one-time cleaning of the liquid chromatograph, the number of calibrations per batch, the number of samples analyzed per batch, the number of batches analyzed during a first period, and a reanalysis rate that requires a reanalysis to confirm whether carryover has occurred, and

calculate a second profit obtained during the second period in a case where the second cleaning solution is used instead of the first cleaning solution, based on the third period, the number of samples analyzed per batch, the number of batches analyzed during the first period, and a first profit obtained per one-time analysis

The above and/or other aspects, features and/or advantages of various embodiments will be further appreciated in view of the following description in conjunction with the accompanying figures. Various embodiments can include and/or exclude different aspects, features and/or advantages where applicable. In addition, various embodiments can combine one or more aspect or feature of other embodiments where applicable. The descriptions of aspects, features and/or advantages of particular embodiments should not be construed as limiting other embodiments or the claims.

## BRIEF DESCRIPTION OF THE DRAWINGS

The preferred embodiments of the present disclosure are shown by way of example, and not limitation, in the accompanying figures.

FIG. 1 is a schematic configuration diagram of a liquid chromatograph according to an embodiment.
FIG. 2 is a diagram showing a display screen for calculation of cost performance according to the embodiment.
FIG. 3 is a flowchart showing the calculation processing of cost performance according to the embodiment.
FIG. 4 is a diagram showing a display screen for the calculation of cost performance according to a modification.
FIG. 5 is a flowchart showing the calculation processing of cost performance in a liquid chromatograph according to the modification.

## DETAILED DESCRIPTION OF THE PREFERRED EMBODIMENTS

In the following paragraphs, some preferred embodiments of the present disclosure will be described by way of example and not limitation. It should be understood based on this disclosure that various other modifications can be made by those skilled in the art based on these illustrated embodiments.
Hereinafter, some embodiments of the present disclosure will be described with reference to the attached drawings. Note that the same or equivalent part in the figures is assigned by the same reference symbol, and the description will not be repeated.

## [1. Configuration of Liquid Chromatograph]

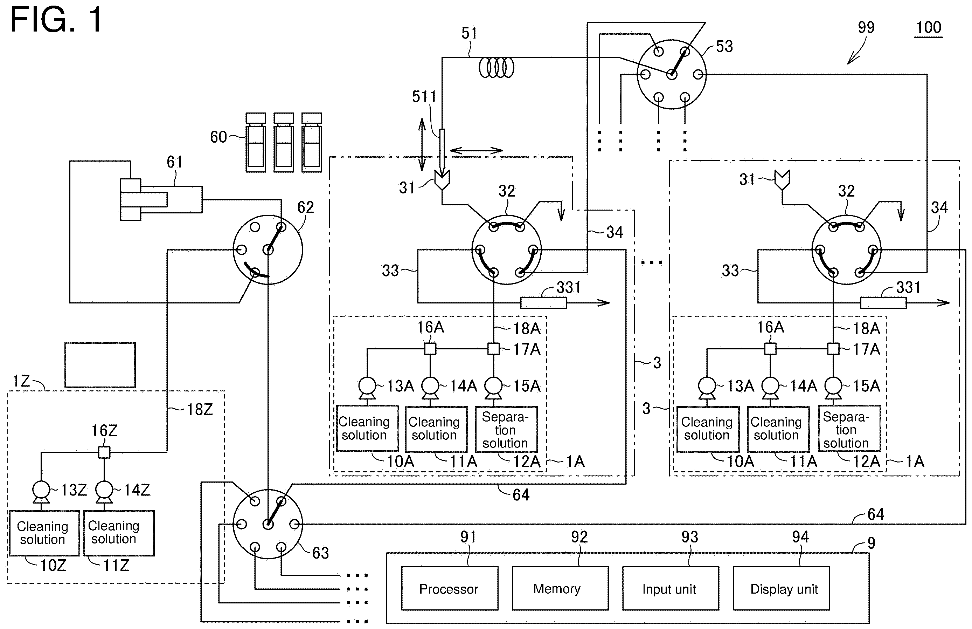

FIG. 1 is a schematic configuration diagram of a liquid chromatograph according to an embodiment. In one example, the liquid chromatograph 100 is a Multiplex LC-MS, which includes a plurality of analysis units 3 for simultaneously conducting analyses on a plurality of samples. The liquid chromatograph 100 can perform analyses of a plurality of samples in parallel using the plurality of analysis units 3. For this reason, it is suitable, for example, for clinical laboratories in hospitals, contract research organizations, pharmaceutical companies, research institutes, etc., where multiple specimens (samples) are collectively processed under the same analytical conditions. In other examples, the liquid chromatograph 100 may be a liquid chromatograph including only one analysis unit.
The liquid chromatograph 100 includes an analysis device 99 and a control device 9. The analysis device 99 includes a reagent supply unit 1Z, an analysis unit 3, a sampling flow path 51, a selection valves 53 and 63, a sample container 60, a metering pump 61, and a low-pressure valve 62.
The proximal end of the sampling flow path 51 is connected to the common port of the selection valve 53. The sampling flow path 51 has a sampling needle 511 at its tip. The position of the needle 511 is moved three-dimensionally by a moving mechanism (not illustrated). The proximal end of the sampling flow path 51 is fluidly connected to the metering pump 61 via the selection valve 53, allowing the sample contained in the sample container 60 positioned in a predetermined location to be sucked in through the needle 511 and retained. Further, by connecting the needle 511 to the injection port 31 of the analysis unit 3, the sampling flow path 51 can be fluidly connected to the analytical flow path 33 of the analysis unit 3.
The metering pump 61 is used to aspirate a predetermined amount of the sample with the needle 511. The metering pump 61 is, for example, a syringe pump.
The plurality of analysis units 3 may have the same or different configurations. In this embodiment, the plurality of analysis units 3 will be described as having the same configuration. In the example in FIG. 1, each analysis unit 3 includes a reagent supply unit 1A, an injection port 31, a high-pressure valve 32, an analytical flow path 33, and a flow path 34.
The reagent supply unit 1A supplies a separation solution for the separation of a sample to the analytical flow path 33. The separation solution is also referred to by those skilled in the art as the "mobile phase." The reagent supply unit 1A also supplies cleaning solutions, which are used for cleaning the analytical flow path 33 and other parts of the system.
According to the example shown in FIG. 1, the reagent supply unit 1A includes cleaning solution containers 10A and 11A, a separation solution container 12A, cleaning solution pumps 13A and 14A, a separation solution pump 15A, a mixing valve 16A, a switching valve 17A, and a reagent flow path 18A. The configuration of the reagent supply unit 1A in each analysis unit 3 may be the same or differ from each other.

In one example, the reagent supply unit 1A includes a plurality of cleaning solution containers 10A and 11A, each containing a solution of a different composition. In FIG. 1, the reagent supply unit 1A is illustrated as including two cleaning solution containers, but obviously, the reagent supply unit 1A may include three or more cleaning solution containers. In other examples, a plurality of cleaning solution containers may contain solutions having the same composition. In yet another example, the reagent supply unit 1A may include a single cleaning solution container.

The separation solution container 12A contains a separation solution. The reagent supply unit 1A may be configured to include a plurality of separation solution containers in the same manner as the cleaning solution containers.

The cleaning solution pumps 13A and 14A supply the cleaning solutions contained in the respective cleaning solution containers 10A and 11A to the mixing valve 16A.

The mixing valve 16A mixes cleaning solutions supplied from two or more cleaning solution containers at a predetermined mixing ratio. In the example in FIG. 1, the mixing valve 16A mixes the cleaning solutions contained in the cleaning solution containers 10A and 11A at a predetermined mixing ratio and supplies the mixture to the switching valve 17A. The separation solution pump 15A supplies the separation solution contained in the separation solution container 12A to the switching valve 17A. The mixing ratio includes 100:0. The mixing ratio may be set to remain constant during the separation of the sample, or it may be set to change over time during the separation. The switching valve 17A connects one of the separation solution pump 15A and the mixing valve 16A to the high-pressure valve 32 via the reagent flow path 18A. As a result, the separation solution or the cleaning solution is supplied to the high-pressure valve 32 via the reagent flow path 18A.

In one example, the high-pressure valve 32 is a 2-position valve with six ports arranged on the same circumference, switching the connection state between adjacent ports. One port of the high-pressure valve 32 is connected to the injection port 31. One of the ports adjacent to the port connected to the injection port 31 leads to a drain, and to the other is connected the upstream end of the analytical flow path 33. The port adjacent to the port to which the upstream end of the analytical flow path 33 is connected, the port being opposite the port connected to the injection port 31, is connected to the reagent flow path 18A. The remaining two ports of the high-pressure valve 32 are connected to the respective flow paths 34 and 64. The flow path 34 is connected to one of the selection ports of the selection valve 53, and the flow path 64 is connected to one of the selection ports of the selection valve 63.

The analytical flow path 33 is a flow path for separation and analysis of a sample. The analytical flow path 33 has a column 331 for separating the components in the sample. The components separated in the column 331 are detected by a mass analysis device, which is not illustrated.

The common port of the selection valve 63 is connected to the common port of the low-pressure valve 62. Selection ports of the low-pressure valve 62 are connected to the metering pump 61 and the reagent flow path 18Z of the reagent supply unit 1Z.

The reagent supply unit 1Z supplies a cleaning solution, which is used for cleaning the sampling flow path 51 and other parts. In the example in FIG. 1, the reagent supply unit 1Z includes cleaning solution containers 10Z and 11Z, cleaning solution pumps 13Z and 14Z, a mixing valve 16Z, and a reagent flow path 18Z.

In one example, the configurations of the cleaning solution containers 10Z and 11Z, the cleaning solution pumps 13Z and 14Z, the mixing valve 16Z, and the reagent flow path 18Z in the reagent supply unit 1Z are the same as those of the cleaning solution containers 10A and 11A, the cleaning solution pumps 13A and 14A, the mixing valve 16A, and the reagent flow path 18A. In other examples, at least some of the configurations of the cleaning solution containers 10Z and 11Z, the cleaning solution pumps 13Z and 14Z, the mixing valve 16Z, and the reagent flow path 18Z in the reagent supply unit 1Z may be configured to be different from the corresponding configurations of the cleaning solution containers 10A and 11A, the cleaning solution pumps 13A and 14A, the mixing valve 16A, and the reagent flow path 18A.

The control device 9 is a computer in one example. The control device 9 includes a processor 91, a memory 92, a display unit 94, and an input unit 93.

The processor 91 includes, for example, a CPU (Central Processing Unit). The processor 91 expands the program stored in the memory 92 onto the RAM, etc., and executes it.

The memory 92 includes, for example, a ROM (Read Only Memory), a RAM (Random Access Memory), and a non-volatile memory. Note that the memory 92 may include a hard disk device instead of or in addition to the nonvolatile memory. The memory includes a program that, when executed by the control device 9, causes the control device 9 to execute the calculation method for cost performance in the liquid chromatograph of this embodiment.

The input unit 93 is a unit for inputting user's instructions to the control device 9. For example, the input unit 93 includes a keyboard and a pointing device such as a mouse.

The display unit 94 includes a liquid crystal display or the like. The control device 9 generates display data and displays it on the display unit 94 according to a program that describes the processing procedures. This control is not limited to processing by software, but can also be processed by dedicated hardware (electronic circuits).

The control device 9 controls the entire liquid chromatograph 100. The control device 9 controls, among other things, each valve of the analysis device 99 to switch the flow path configuration, thereby supplying the cleaning solution supplied from the reagent supply units 1A and 1Z to the sampling flow path 51, the analytical flow path 33, etc. for cleaning. Further, the control device 9 executes the calculation method for cost performance. The control device 9 may include a plurality of computers. For example, the control device 9 may include a computer for control that controls the analysis device 99 and a computer for analysis that executes the cost performance calculation method of the embodiment.

[2. **Comparison with Conventional Liquid Chromatograph**]

As a method of eliminating carryover in a liquid chromatograph, a method of washing out the remaining sample by passing a separation solution through the analysis device after the analysis of the sample has conventionally been used. However, the method requires the separation solution to flow for an extended period in order to fully eliminate the carryover. For example, a separation solution is passed through in a blank state with no sample injected, in the same manner as when separating a sample. In this case, since the cleaning time is the same as the time required for sample separation, the time required for analysis of a predetermined number of samples (hereinafter referred to as the "required time for analysis") is approximately twice as long as the time actually required for analysis of a predetermined number of samples. Note that the above-described "actual time required for analyze of a predetermined number of samples" refers to "the time required to separate a predetermined number of samples by the column 331 and perform mass spectrometry."

Further, there are cases in which the carryover has not been eliminated even after implementing the cleaning method of flowing the separation solution. Therefore, even in the case where an abnormal value is detected after analyzing a sample, it is not clear whether it is due to carryover or whether the sample actually exhibits an abnormal value. Therefore, when using a conventional cleaning method in which a separation solution is passed through the system, it is necessary to reanalyze the sample that shows an abnormal value as a result of the analysis to confirm whether carryover effects are present. Therefore, in the case of using a cleaning method in which a separation solution is passed through the system, the required time for analysis will become even longer due to the reanalysis. For example, in the case where reanalysis is required for about 10% of samples, 1.1 times the analysis time for a predetermined number of samples without reanalysis will be required to complete the analyses of the predetermined number of samples. Note that the reanalysis is also referred to as the "re-run" or "re-inj ection" by those skilled in the art.

In response to the above-described issues, high-performance cleaning solutions that can efficiently reduce carryover have been developed in recent years. Simply passing such a high-performance cleaning solution through the analysis device for a short period eliminates carryover. Such a high-performance cleaning solution is, for example, an organic solvent suitable for cleaning an analysis device. Further, as for such a high-performance cleaning solution, a combination of multiple types of cleaning solutions is typically used. Such a high-performance cleaning solution tends to be more expensive than a separation solution.

Therefore, although it is attractive to a user that the introduction of a high-performance cleaning solution reduces the required time for analysis, it is difficult to determine whether the cost of the high-performance cleaning solution is worth it. Even if it is possible to calculate the cost of the above-described multiple types of cleaning solutions for a single cleaning, it would be difficult for the user to determine the cost of using a combination of such multiple types of cleaning solutions throughout a predetermined period.

[3. **Calculation Method and Display Screen of Cost Performance According to Embodiment**]

Therefore, in the liquid chromatograph 100 and the calculation method for cost performance, it is possible to provide information on the cost performance when a high-performance cleaning solution is used by the user inputting basic numerical values related to the analysis.

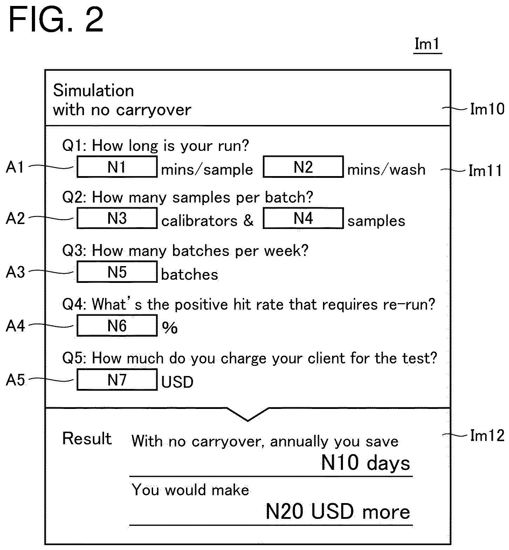

FIG. 2 is a diagram showing a display screen for calculation of cost performance according to the embodiment. The display screen includes an image Im1. The image Im1 includes an image Im 10 showing the title of the image Im1, an image Im 11 in which the user inputs numerical values for analysis, and an image Im12 that displays information about cost performance of a cleaning solution calculated by the control device 9. Specifically, the control device 9 calculates and displays the time reduced in a case where high-performance second cleaning solution is used instead of a conventional first cleaning solution in the analysis of a predetermined number of samples, as well as the profit corresponding to the reduced time.

In other words, the control device 9 calculates the time difference between the time required to analyze a predetermined number of samples under a first condition using a first cleaning solution and the time required to analyze a predetermined number of samples under a second condition using a second cleaning solution in the liquid chromatograph. Further, the control device 9 calculates the profit that is obtained in a case where the sample is analyzed under the second condition for the time difference.

The time required to clean the liquid chromatograph 100 with the second cleaning solution is shorter than the time required to clean the liquid chromatograph 100 with the first cleaning solution. The second cleaning solution is less likely to carry over in the liquid chromatograph 100 than the first cleaning solution.

In one example, the time required to clean the liquid chromatograph 100 with the second cleaning solution is much shorter than the time required to clean the liquid chromatograph 100 with the first cleaning solution. Therefore, the time required to clean the liquid chromatograph 100 with the second cleaning solution can be considered as zero. Further, the second cleaning solution is a cleaning solution that does not cause carryover. Therefore, when cleaning is performed using the second cleaning solution, there is no need to reanalyze the sample after cleaning to verify the carryover effect even if abnormal values are detected in the analysis of the sample after cleaning. Therefore, there is no need for reanalysis when the second cleaning solution is used.

In one example, the first cleaning solution is a solution having the same composition as the separation solution used to separate the sample. The second cleaning solution is a solution having a composition different from that of the separation solution. In one example, the second cleaning solution contains an organic solvent suitable for cleaning an analysis device. The second cleaning solution may include a combination of multiple cleaning solutions. These multiple types of cleaning solutions are, for example, stored in multiple cleaning solution containers, and mixed by mixing valves or other means as appropriate for use in cleaning. At least a part of the multiple types of cleaning solutions may be stored in a single cleaning solution container in a mixed state.

In one example, a user collects a large number of samples from a client and analyzes them collectively. The user is, for example, a contract research organization. In one example, the user initially collects a number of specimens (samples) from the client. Then, the analysis of a large number of samples is divided into multiple batch analyses. The user performs the batch analysis using the liquid chromatograph 100. The user provides the client with the obtained analysis results. The user charges the client a predetermined amount of money before or after the analysis of the sample and collects it from the client as compensation for the sample analysis.

Hereinafter, the seven numerical values N1 to N7, which are used to calculate the time reduced in a case where the second cleaning solution is used in place of the first cleaning solution in the analysis of a predetermined number of samples, and the profit corresponding to the reduced time, will be described. The numerical values N1 to N7 are those under the first condition.

N1: Analysis time required for one-time analysis (hereinafter also referred to as the "one-time analysis time"). In one example, the one-time analysis time is expressed in "minutes"

N2: Cleaning time required for one-time cleaning of a liquid chromatograph (hereafter also referred to as "one-time cleaning time"). In one example, the one-time cleaning time is expressed in "minutes"

N3: Number of calibrations per batch (hereafter also referred to as the "number of calibrations per batch")

N4: Number of samples analyzed per batch (hereinafter also referred to as the "number of samples per batch")

N5: Number of batches analyzed during the first period (hereafter also referred to as the "number of batches per first period")

N6: Reanalysis rate at which reanalysis is required to confirm whether carryover has occurred (hereafter also referred to as the "reanalysis rate")

N7: First profit obtained per one-time analysis (hereinafter also referred to as the "first profit")

Based on the above-described numerical values N1 to N7, the following numerical values N10 and N20 for cost performance are calculated.

N10: Third period that is shortened during a second period in a case where the second cleaning solution is used instead of the first cleaning solution

N20: the second profit obtained during the second period in a case where the second cleaning solution is used instead of the first cleaning solution

Each of the first period and the second period described above is a predetermined period set in advance. The first period is a period that serves as the unit of analysis. The first period is a single value set, for example, between one day and one year. In one example, the first period of time is one week. The second period is a period that serves as the unit for the cost performance calculation. The second period is a period having the same length as, or longer than, the first period. The second period is a single value set, for example, between one day and several years. In one example, the second period is one year.

In one example, the third period is calculated in days, but its unit of the third period is not limited to this and may be calculated, for example, in weeks or hours.

In one example, the control device 9 calculates N10 and N20 based on N1 to N7 using the following Formulas 1 to 2.

$$N10 = \left[ N2 \times \left\{ \left( N4 \times \left( \frac{100+N6}{100} \right) \right) + 4 \right\} + N1 \times \left\{ \left( \frac{N4 \times N6}{100} \right) + N3 \right\} \right] \times N5 \times \frac{52}{60 \times 24} \cdot \cdot (1)$$

$$N20 = \frac{N10 \times N4 \times N5 \times N7}{7} \qquad \cdots (2)$$

Formula 1 and Formula 2 will be described below.

N2 x {(N4 x (100 + N6)/100) + 4} in Formula 1 is hereinafter referred to as the "first part of Formula 1". The first part of Formula 1 indicates the total cleaning time required to analyze the samples contained in one batch when cleaning with the first cleaning solution. More specifically, the first part of Formula 1 indicates the total cleaning time required to complete one batch under the first condition.

More specifically, {(N4 x (100 + N6)/100) + 4} indicates the total number of cleanings required to complete one batch under the first condition. The total cleaning time is calculated by multiplying the total number of cleanings by N2.

N4 x (100 + N6)/100 is the number of cleanings per batch for analysis. Therefore, N4 x (100 + N6)/100 equals the number of analyses of the samples per batch. More specifically, the number of samples N4 per batch is the number of analyses per batch when there is no reanalysis. Therefore, by including the number of reanalyses by multiplying the numerical value N4 by (100 + N6)/100, the number of analyses per batch, including reanalyses, can be calculated. For example, in the case where reanalysis is performed with a probability of 10%, the reanalysis rate N6 = 10, so N4 x (100 + N6) / 100 = N4 x (100 + 10) / 100 = N4 x 1.1. Thus, including reanalyses, 1.1 times the number N4 of analyses per batch is analyzed. The control device 9 then performs cleaning for each analysis.

Next, the "4" at the end of {(N4 x (100 + N6)/100) + 4} will be described. The "4" is the number of cleanings without analysis per batch. In one example, the control device 9 performs a round of analyses on all samples in one batch, and then reanalyzes the samples that showed abnormal values collectively. The control device 9 performs cleaning before and after initiating analysis on all samples in the batch. Further, cleaning is also performed before and after the reanalyses of samples that showed the abnormal values. Thus, in each batch, cleaning without analysis is performed four times. Naturally, in the case where the number of cleanings without analysis per batch is a predetermined number that is not 4, the value of "4" at the end of {(N4 x (100 + N6)/100) + 4} is also changed to the predetermined number.

N1 x {((N4 x N6)/100) + N3} in Formula 1 is hereinafter referred to as the "second part of Formula 1." The second part of Formula 1 indicates the total reanalysis time required per batch to perform reanalysis in view of the possibility of carryover. In other words, the second part of Formula 1 is the sum of the time it takes with respect to carryover to complete one batch under the first condition. ((N4 x N6)/100) indicates the number of reanalyses per batch. Then, although the number of calibrations for reanalysis must be added to the ((N4 x N6)/100), in this example, the number of calibrations for reanalysis is equal to the number N3 of calibrations per batch. Therefore, the sum of the number of reanalyses and the number of calibrations accompanied by reanalysis, per batch, is {((N4 x N6)/100) + N3}. In one example, when reanalyzing samples that showed abnormal values after completing the full analyses of the samples in the batch, the user performs the same number of calibrations as for each batch analysis. However, in the case of performing calibrations a predetermined number of times during reanalysis, which differs from each batch analysis, the "N3" at the end of f ((N4 x N6)/100) + N3} will be changed to the predetermined number of times.

As described above, { (N4 x N6)/100) + N3} in Formula 1 represents the sum of the number of reanalyses for a possible carryover and the associated number of calibrations, in a single batch. Therefore, in the case where reanalysis is necessary in view of the possibility of carryover, by multiplying the {((N4 x N6)/100) + N3} by the one-time analysis time N1, the "sum of the time required for reanalysis and the time required for carryover due to reanalysis" in one batch is calculated.

Based on the above, the sum of the first part and the second part of Formula 1 is not needed when using the second cleaning solution, which can be considered to have no carryover possibility and a cleaning time of zero. However, it becomes the necessary time when using the first cleaning solution, which has a possibility of carryover and requires a specified cleaning time. Therefore, the sum of the first part of Formula 1 and the second part of Formula 2 indicates the period shortened in a case where the second cleaning solution is used instead of the first cleaning solution.

N5 x 52/(60 x 24) in Formula 1 is hereinafter referred to as the "third part of Formula 1." The third part of Formula 1 converts the units of the first part and the second part of Formula 1.

In this example, since one-time cleaning time N1 and one-time analysis time N2 are expressed in units of "minutes," the first part of Formula 1 and the second part of Formula 1 also have units of "minutes." Therefore, in the third part of Formula 1, the sum of the first and second parts of Formula 1 is divided by (60 (minutes) x 24 (hours)) to convert the unit to "days."

Further, the first part of Formula 1 and the second parts of Formula 1 indicate the total cleaning time and total reanalysis time per batch, respectively. Therefore, by integrating the number of batches N5 per first period, the time required for cleaning and reanalysis per week can be calculated. Further, by multiplying by 52 (weeks), this is converted to the time required for cleaning per second period (one year) and the time needed to perform reanalysis.

Therefore, by multiplying the first part and the second part of Formula 1 by the third part, the third period N10 (days) that can be shortened during the second period (one year) in a case where the second cleaning solution is used instead of the first cleaning solution can be calculated.

In Formula 2, the third period N10 is multiplied by the number N4 of samples per batch, the number N5 of batches per first period, and the first profit N7, and then divided by 7. The reason for dividing by 7 is that in this example, the first period is weekly. This is to convert the number N5 of batches per first period into the number of batches per day. Since the third period N10 and the unit are thus aligned, the number of batches that can be performed in the third period N10 can be calculated by multiplying the third period N10 (days) and the number of batches per day. Then, by multiplying the number of batches that can be performed in the third period N10 by the number N4 of samples per batch and the first profit N7, the second profit N20 that can be obtained additionally in a year by introducing the second cleaning solution can be calculated.

In the example in FIG. 2, the image Im10 shows the title "Simulation with no carryover." In the image Im11, Questions Q1 to Q5 are shown, and forms are displayed to accept the inputs of the answers A1 to A5 to Questions Q1 to Q5. The user inputs the values of N1 to N7 described above as the answers A1 to A5.

Question Q1 asks, "How long is your run?" The user inputs N1 (minutes/sample) and N2 (minutes/cleaning) as the answer A1 to Question Q1.

Question Q2 asks, "How many samples per batch?" The user inputs N3 (calibrations) and N4 (samples) as the answers A2 to Question Q2.

Question Q3 asks, "How many batches per week?" The user inputs N5 (batches) as the answer A3 to Question Q3.

Question Q4 asks, "What's the positive hit rate that requires re-run?" The user inputs N6 (%) as the answer A4 to Question Q4.

Question Q5 asks, "How much do you charge for the test?" The user inputs N7 (USD: United States Dollar) as the answer A5 to Question Q5.

When the user inputs N1 to N7 in the image Im11, in the image Im12, N10 and N20, which are calculated by the control device 9 using N1 to N7, are displayed. Specifically, in the image Im12, as "Result," "With no carryover, annually you save N10 (days)," and "You would make N20 (USD) more."

As shown in FIG. 2, according to this embodiment, it is possible to easily output the third period N10, which is shortened in a case where a second cleaning solution is used instead of the first cleaning solution, and the second profit N20, which is obtained by conducting analysis with the second cleaning solution during the shortened third period. Therefore, "Simulation with no carryover," which is the title of the image Im1, can be easily performed. The user can easily determine whether or not to introduce the second cleaning solution in light of the third period N10 and/or the second profit N20 and the purchase price of the second cleaning solution.

The display screen in FIG. 2 is provided to the user, for example, by the manufacturer of the liquid chromatograph 100 and/or the second cleaning solution. For example, the display screen of FIG. 2 is displayed on the display unit 94 of the liquid chromatograph 100. Further, for example, it may be configured such that the display screen in FIG. 2 is included in the website of the manufacturer of the liquid chromatograph 100 and/or the second cleaning solution, and the user accesses and uses that website. Further, for example, the client may transmit the numerical values N1 to N7 to the user, the user may calculate the numerical values N10 and N20 using the display screen in FIG. 2, and then transmit the display screen and/or the numerical values N10 and N20 to the client.

[4. Calculation Processing of Cost Performance According to Embodiment]

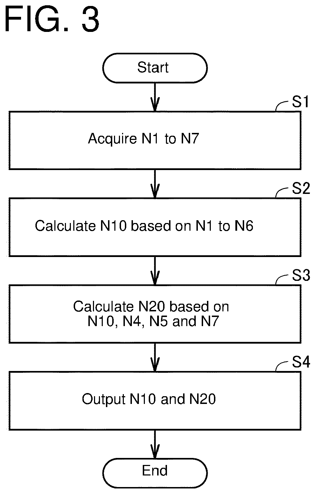

FIG. 3 is a flowchart showing the calculation processing of cost performance. The processing in FIG. 3 is carried out by the processor 91 of the control device 9.

Referring to FIG. 3, in Step (hereinafter referred to as "S") 1, the processor 91 acquires the numerical values N1 to N7. In one example, the processor 91 displays the image Im1 of FIG. 2 on the display unit 94 and acquires the numerical values N1 to N7 input by the user using the input unit 93 in the image Im11.

In S2, the processor 91 calculates the third period N10 based on the numerical values N1 to N6. In one example, the processor 91 calculates the third period N10 that is shortened during the second period in a case where a second cleaning solution is used instead of the first cleaning solution by substituting numerical values N1 to N6 into Formula 1.

In S3, the processor 91 calculates the second profit N20 based on the numerical values N10, N4, N5, and N7. In one example, the processor 91 calculates the second profit N20 obtained during the second period in a case where a second cleaning solution is used instead of the first cleaning solution by substituting the numerical values N10, N4, N5, and N7 into Formula 2.

In S4, the processor 91 outputs the numerical values N10 and N20 and terminates the processing. In one example, the processor 91 displays N10 and/or N20 in the image Im12 on the display unit 94. In other examples, the processor 91 may use a printer, not illustrated, to produce a printout containing N10 and/or N20. In this case, the user provides the printed materials to the client.

According to the processing in FIG. 3, the control device 9 can easily calculate and output the third period N10, which is shortened in a case where a high-performance second cleaning solution is used instead of the conventional first cleaning solution, and the expected second profit N20, based on the basic numerical values N1 to N7 for the analysis. Therefore, it is possible to provide information on the cost performance of cleaning solutions in a liquid chromatograph.

[5. Calculation Method and Display Screen of Cost Performance According to Modification]

In the above-described embodiment, the difference in the cost performance was calculated only for the high-performance second cleaning solution and a conventional first cleaning solution, but a comparison of cost performance may be made for three or more cleaning solutions at the same time.

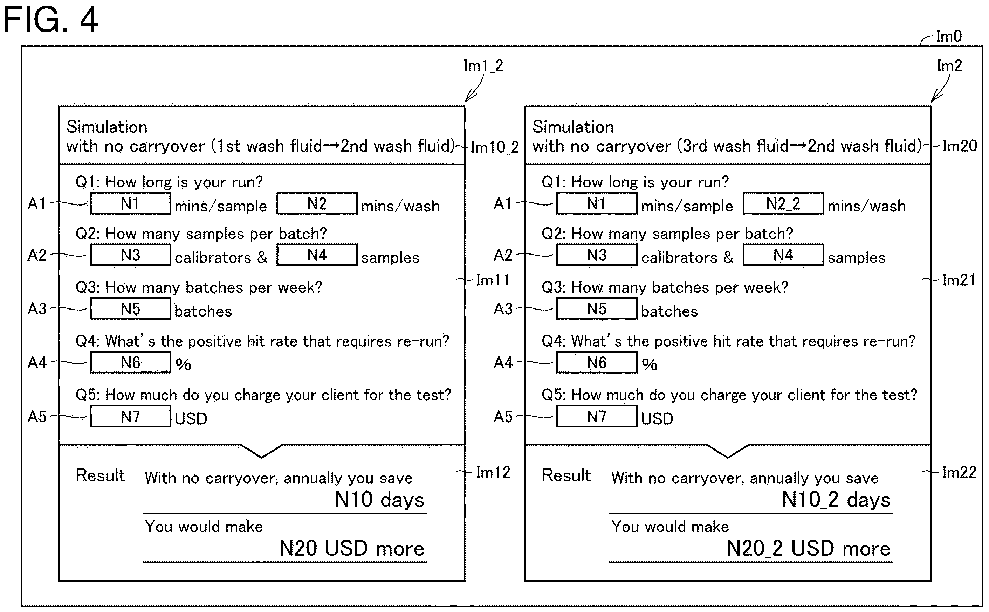

FIG. 4 is a diagram showing the display screen for calculation of cost performance according to a modification. The display screen includes an image Im0. The Image Im0 includes an image Im1_2 and an image Im2.

Image Im1_2 is an image related to the calculation of cost performance in a case where a second cleaning solution is used instead of the first cleaning solution, similar to the image Im 1 in FIG. 2. The only difference between the image Im1_2 and the image Im 1 is the title images Im10 and Im10_2. In the image Im1_2, the title image Im10_2 shows the title "Simulation with no carryover (1st wash fluid → second wash fluid)."

The image Im_2 is an image related to the calculation of cost performance in a case where a second cleaning solution is used instead of a third cleaning solution. The third cleaning solution is a cleaning solution with a composition different from that of the first and second cleaning solutions. In one example, the time required to clean the liquid chromatograph 100 with the second cleaning solution is shorter than the time required to clean the liquid chromatograph 100 with the third cleaning solution. Further, the time required for cleaning the liquid chromatograph 100 with the third cleaning solution is different from the time required for cleaning the liquid chromatograph 100 with the first cleaning solution.

The image Im2 includes images Im20, Im21, and Im22.

The image Im20 shows the title "Simulation with no carryover (3rd wash fluid → 2nd wash fluid)."

In the image Im21, the one-time cleaning time N2_2 when using the third cleaning solution is different from the one-time cleaning time N2 when using the first cleaning solution. One-time cleaning time N2_2 when using a third cleaning solution corresponds to an example of the "second cleaning time." In one example, the same numerical values are automatically input for the same numerical values N1, N3 to N7 in the image Im21 as in the image Im 11. In other examples, the user may input the same numerical values as in the image Im11 using the input unit 93. Further, in the image Im21, the input form may be displayed for only the numerical value N2_2, which is different from that in the image Im11.

Further, in this example, only the cleaning time differs between the third cleaning solution and the first cleaning solution, but if other numerical values (e.g., reanalysis rate N6) also differ, the values may be configured so that they can also be input in the image Im21.

When the user inputs N1, N2_2, and N3 to N7 in the image Im21, in the image Im12, N10 and N20, which are calculated by the control device 9 using N1 to N7, are displayed. Specifically, in the image Im22, as "Result," "With no carryover, annually you save N10_2 (days)" and "You would make N20_2 (USD) more" are displayed.

[6. Calculation Processing of Cost Performance According to Modification]

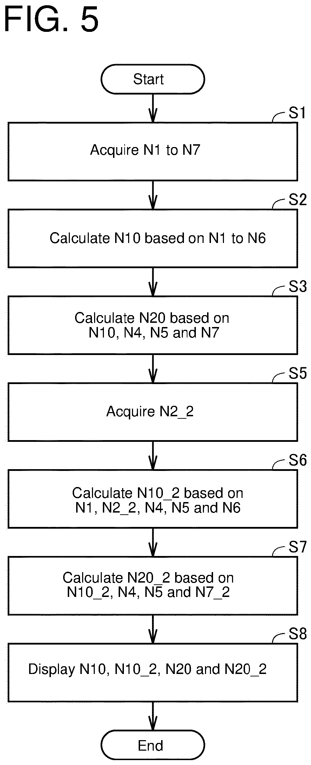

FIG. 5 is a flowchart showing the calculation processing of cost performance according to Modification. The processing of FIG. 5 is carried out by the processor 91 of the control device 9.

S1 to S3 in FIG. 5 are the same as S1 to S3 in FIG. 3.

In S5, the processor 91 acquires the numerical value N2_2. In one example, the processor 91 displays the image Im0 of FIG. 4 on the display unit 94 and acquires the numerical value N2_2 input by the user using the input unit 93 in the image Im21.

In S6, the processor 91 calculates the third period N10_2 based on N1, N2_2, N3, N4, N5, and N6. In one example, the processor 91 calculates the fourth period N10_2 that is shortened during the second period in a case where the second cleaning solution is used instead of the third cleaning solution by substituting the numerical values N1, N2_2, N3, N4, N5, and N6 into Formula 1.

In S7, the processor 91 calculates the second profit N20_2 based on the numerical values N10_2, N4, N5, and N7. In one example, the processor 91 calculates the third profit N20_2 obtained during the second period in a case where the second cleaning solution is used instead of the third cleaning solution by substituting the numerical values N10_2, N4, N5, and N7.

In S8, the processor 91 outputs the numerical values of N10, N10_2, N20, and N20_2 and terminates the processing.

According to the processing in FIG. 5, the control device 9 can simultaneously output information about the cost performance in a case where a second cleaning solution is used instead of the first cleaning solution and information about the cost performance in a case where a third cleaning solution is used instead of the first cleaning solution. Therefore, the user can easily compare the cost performance when using the second cleaning solution instead of the first cleaning solution and the cost performance when using the second cleaning solution instead of the third cleaning solution. Therefore, it can help the user determine which of the first to third cleaning solutions should be used.

**[Aspects]**

It would be understood by those skilled in the art that the exemplary embodiments described above are specific examples of the following aspects.

**(Item 1**)

A calculation method for cost performance in a liquid chromatograph, according to one aspect of the present disclosure, comprising:

a step of calculating a third period shortened during a second period in a case where a second cleaning solution is used in place of a first cleaning solution, based on an analysis time required for one-time analysis in a case where the first cleaning solution is used in a liquid chromatograph capable of batch analysis, a cleaning time required for one-time cleaning of the liquid chromatograph, the number of calibrations per batch, the number of samples analyzed per batch, the number of batches analyzed during a first period, and a reanalysis rate that requires a reanalysis to confirm whether carryover has occurred; and

a step of calculating a second profit obtained during the second period in a case where the second cleaning solution is used instead of the first cleaning solution, based on the third period, the number of samples analyzed per batch, the number of batches analyzed during the first period, and a first profit obtained per one-time analysis

According to the calculation method as recited in the above-described Item 1, it is possible to easily calculate and output the third period shortened and the expected second profit in a case where a high-performance second cleaning solution is used instead of a conventional first cleaning solution, based on the basic numerical values related to the analysis. Therefore, it is possible to provide information on the cost performance of a cleaning solution for a liquid chromatograph.

**(Item 2)**

In the calculation method as recite in the above-described Item 1, it may be configured such that

the first cleaning solution is a solution having the same composition as a separation solution used for sample separation, and

the second cleaning solution is a solution having a composition different from that of the separation solution.

According to the calculation method as recited in the above-described Item 2, it is possible to calculate the third period shortened in a case where a second cleaning solution having a composition different from that of the separation solution is used instead of the first cleaning solution having the same composition as the separation solution, and the corresponding second profit.

**(Item 3)**

In the calculation method as recited in the above-described Item 1 or 2, it may be configured such that

each of the first period and the second period is a predetermined period set in advance, and

the second period is a period having the same length as the first period or a period longer than the first period

According to the calculation method as recited in the above-described Item 3, it is possible to define a second period that is longer than the first period, which serves as the predetermined unit of analysis and as the unit of cost performance calculation, and to calculate the third period that is shortened during the second period and the second profit obtained by that shortening.

**(Item 4)**

In the calculation method as recited in the above-described Item 3, it may be configured such that

the first period is one week, and

the second period is one year.

According to the calculation method as recited in the above-described Item 4, it is possible to easily calculate the third period that is shortened during the second period and the second profit to be gained from such shortening by inputting the number of batches per week, which is a general unit of analysis, and other data.

**(Item 5)**

In the calculation method as recited in any one of the above-described Items 1 to 4, it may be configured to further comprise:

a step of calculating a fourth period shortened during the second period in a case where the second cleaning solution is used in place of a third cleaning solution, based on the analysis time required for one-time analysis in a case where the third cleaning solution is used, a second cleaning time required for one-time cleaning of the liquid chromatograph, the number of samples analyzed per batch, the reanalysis rate, and the number of calibrations per batch; and
a step of calculating a third profit obtained during the second period in a case where the second cleaning solution is used instead of the third cleaning solution, based on the fourth period, the number of samples analyzed per batch, the number of batches analyzed during the first period, and the first profit.

According to the calculation method as recited in the above-described Item 5, it is possible to simultaneously output information on the cost performance in a case where a second cleaning solution is used instead of the first cleaning solution and information on the cost performance when a second cleaning solution is used instead of the third cleaning solution. Therefore, the user can easily compare the cost performance when using the second cleaning solution instead of the first cleaning solution and the cost performance when using the second cleaning solution instead of the third cleaning solution. Therefore, it can help the user determine which of the first to third cleaning solutions should be used.

**(Item 6)**

A computer-readable storage medium storing a program which, when executed by a computer, makes the computer execute a calculation method for cost performance in a liquid chromatograph as recited in any one of the above-described Items 1 to 5.

According to the storage medium as recited in the above-described Item 6, it is possible to easily perform the calculation method for cost performance in a liquid chromatograph as recited in any one of the above-described Items 1 to 5.

**(Item 7)**

A computer program product comprising instructions which, when the program is executed by a computer, cause the computer to execute a calculation method for cost performance in a liquid chromatograph as recited in any one of the above-described Items 1 to 5.

**(Item 8)**

An analysis device, according to another aspect of the present disclosure, comprises:

a processor; and
a memory,
wherein the processor is configured to
calculate a third period shortened during a second period in a case where a second cleaning solution is used in place of a first cleaning solution, based on an analysis time required for one-time analysis in a case where the first cleaning solution is used, in a liquid chromatograph capable of batch analysis, a cleaning time required for one-time cleaning of the liquid chromatograph, the number of calibrations per batch, the number of samples analyzed per batch, the number of batches analyzed during a first period, and a reanalysis rate that requires a reanalysis to confirm whether carryover has occurred, and
calculate a second profit obtained during the second period in a case where the second cleaning solution is used instead of the first cleaning solution, based on the third period, the number of samples analyzed per batch, the number of batches analyzed during the first period, and a first profit obtained per one-time analysis.

According to the analysis device as recited in the above-described Item 8, it is possible to easily calculate and output the third period that is shortened and the expected second profit in a case where a high-performance second cleaning solution is used instead of the conventional first cleaning solution, based on the basic numerical values related to the analysis. Therefore, it is possible to provide information on the cost performance of a cleaning solution for a liquid chromatograph.

**(Item 9)**

The analysis device as recited in the above-described Item 8, may be configured such that

the first cleaning solution is a solution having the same composition as a separation solution used for sample separation, and
the second cleaning solution is a solution having a composition different from that of the separation solution.

**(Item 10)**

The analysis device as recited in the above-described Item 8 or Item 9, may be configured such that

each of the first period and the second period is a predetermined period set in advance, and
the second period is a period having the same length as the first period or a period longer than the first period.

**(Item 11)**

The analysis device as recited in the above-described Items 8 to 10, may be configured such that
the first period is one week, and
the second period is one year.

**(Item 12)**

The analysis device as recited in the above-described Items 8 to 11, may be configured to further comprising:

a step of calculating a fourth period shortened during the second period in a case where the second cleaning solution is used in place of a third cleaning solution, based on the analysis time required for one-time analysis in a case where the third cleaning solution is used, a second cleaning time required for one-time cleaning of the liquid chromatograph, the number of samples analyzed per batch, the reanalysis rate, and the number of calibrations per batch; and
a step of calculating a third profit obtained during the second period in a case where the second cleaning solution is used instead of the third cleaning solution, based on the fourth period, the number of samples analyzed per batch, the number of batches analyzed during the first period, and the first profit.

**Claims**

1. A calculation method for cost performance in a liquid chromatograph (100), comprising:

a step of calculating a third period (N10) shortened during a second period in a case where a second cleaning solution is used in place of a first cleaning solution, based on an analysis time required for one-time analysis (N1) in a case where the first cleaning solution is used in a liquid chromatograph (100) capable of batch analysis, a cleaning time required for one-time cleaning of the liquid chromatograph (N2), the number of calibrations per batch (N3), the number of samples analyzed per batch (N4), the number of batches analyzed during a first period (N5), and a reanalysis rate that requires a reanalysis to confirm whether carryover has occurred (N6); and
a step of calculating a second profit (N20) obtained during the second period in a case where the second cleaning solution is used instead of the first cleaning solution, based on the third period (N10), the number of samples analyzed per batch (N4), the number of batches analyzed during the first period (N5), and a first profit obtained per one-time analysis (N7).

2. The calculation method for cost performance in a liquid chromatograph (100), as recited in claim 1,

wherein the first cleaning solution is a solution having the same composition as a separation solution used for sample separation, and
wherein the second cleaning solution is a solution having a composition different from that of the separation solution.

3. The calculation method for cost performance in a liquid chromatograph (100), as recited in claim 1 or 2,

wherein each of the first period and the second period is a predetermined period set in advance, and
wherein the second period is a period having the same length as the first period or a period longer than the first period.

4. The calculation method for cost performance in a liquid chromatograph (100), as recited in any one of claims 1 to 3,

wherein the first period is one week, and
wherein the second period is one year.

5. The calculation method for cost performance in a liquid chromatograph (100), as recited in any one of claims 1 to 4, further comprising:

a step of calculating a fourth period shortened during the second period in a case where the second cleaning solution is used in place of a third cleaning solution, based on the analysis time required for one-time analysis (N1) in a case where the third cleaning solution is used, a second cleaning time required for one-time cleaning of the liquid chromatograph (100), the number of samples analyzed per batch (N4), the reanalysis rate (N6), and the number of calibrations per batch (N3); and
a step of calculating a third profit obtained during the second period in a case where the second cleaning solution is used instead of the third cleaning solution, based on the fourth period, the number of samples analyzed per batch (N4), the number of batches analyzed during the first period (N5), and the first profit (N7).

6. A computer-readable storage medium storing a program which, when executed by a computer, makes the computer execute the calculation method for cost performance in a liquid chromatograph (100) as claimed in any one of claims 1 to 5.

7. A computer program product comprising instructions which, when the program is executed by a computer, cause the computer to execute the calculation method for cost performance in a liquid chromatograph (100) as claimed in any one of claims 1 to 5.

8. An analysis device comprising:

a processor (91); and
a memory (92),
wherein the processor (91) is configured to
calculate a third period shortened during a second period in a case where a second cleaning solution is used in place of a first cleaning solution, based on an analysis time required for one-time analysis (N1) in a case where the first cleaning solution is used, in a liquid chromatograph (100) capable of batch analysis, a cleaning time required for one-time cleaning of the liquid chromatograph (N2), the number of calibrations per batch (N3), the number of samples analyzed per batch (N4), the number of batches analyzed during a first period (N5), and a reanalysis rate that requires a reanalysis to confirm whether carryover has occurred (N6), and
calculate a second profit (N20) obtained during the second period in a case where the second cleaning solution is used instead of the first cleaning solution, based on the third period, the number of samples analyzed per batch (N4), the number of batches analyzed during the first period (N5), and a first profit obtained per one-time analysis (N7).

9. The analysis device, as recited in claim 8,

wherein the first cleaning solution is a solution having the same composition as a separation solution used for sample separation, and
wherein the second cleaning solution is a solution having a composition different from that of the separation solution.

10. The analysis device, as recited in claim 8 or 9,

wherein each of the first period and the second period is a predetermined period set in advance, and wherein the second period is a period having the same length as the first period or a period longer than the first period.

11. The analysis device, as recited in any one of claims 8 to 10,

wherein the first period is one week, and
wherein the second period is one year.

12. The analysis device, as recited in any one of claims 8 to 11,
further comprising:

a step of calculating a fourth period shortened during the second period in a case where the second cleaning solution is used in place of a third cleaning solution, based on the analysis time required for one-time analysis (N1) in a case where the third cleaning solution is used, a second cleaning time required for one-time cleaning of the liquid chromatograph (100), the number of samples analyzed per batch (N4), the reanalysis rate (N6), and the number of calibrations per batch (N3); and
a step of calculating a third profit obtained during the second period in a case where the second cleaning solution is used instead of the third cleaning solution, based on the fourth period, the number of samples analyzed per batch (N4), the number of batches analyzed during the first period (N5), and the first profit (N7).

FIG. 1

EP 4 538 699 A1

# FIG. 2

Im1

Simulation
with no carryover ———Im10

Q1: How long is your run?

A1 ——— [ N1 ] mins/sample [ N2 ] mins/wash ———Im11

Q2: How many samples per batch?

A2 ——— [ N3 ] calibrators & [ N4 ] samples

Q3: How many batches per week?

A3 ——— [ N5 ] batches

Q4: What's the positive hit rate that requires re-run?

A4 ——— [ N6 ] %

Q5: How much do you charge your client for the test?

A5 ——— [ N7 ] USD

Result   With no carryover, annually you save ———Im12

N10 days

You would make

N20 USD more

# FIG. 3

```
        ┌─────────────┐
        │    Start     │
        └─────────────┘
               │
               ▼              ╭ S1
        ┌──────────────────────┐
        │    Acquire N1 to N7   │
        └──────────────────────┘
               │
               ▼              ╭ S2
        ┌──────────────────────┐
        │ Calculate N10 based   │
        │     on N1 to N6       │
        └──────────────────────┘
               │
               ▼              ╭ S3
        ┌──────────────────────┐
        │  Calculate N20 based  │
        │    on N10, N4, N5     │
        │       and N7          │
        └──────────────────────┘
               │
               ▼              ╭ S4
        ┌──────────────────────┐
        │  Output N10 and N20   │
        └──────────────────────┘
               │
               ▼
        ┌─────────────┐
        │     End      │
        └─────────────┘
```

# FIG. 4

**Im0**

**Im1_2**

**Im2**

**Simulation**
with no carryover (1st wash fluid→2nd wash fluid) — **Im10_2**

A1 — Q1: How long is your run?
| N1 | mins/sample | N2 | mins/wash |

A2 — Q2: How many samples per batch?
| N3 | calibrators & | N4 | samples |

A3 — Q3: How many batches per week?
| N5 | batches |

**Im11**

A4 — Q4: What's the positive hit rate that requires re-run?
| N6 | %

A5 — Q5: How much do you charge your client for the test?
| N7 | USD

Result   With no carryover, annually you save
**N10 days**
You would make
**N20 USD more**

**Im12**

**Simulation**
with no carryover (3rd wash fluid→2nd wash fluid) — **Im20**

A1 — Q1: How long is your run?
| N1 | mins/sample | N2_2 | mins/wash |

A2 — Q2: How many samples per batch?
| N3 | calibrators & | N4 | samples |

A3 — Q3: How many batches per week?
| N5 | batches |

**Im21**

A4 — Q4: What's the positive hit rate that requires re-run?
| N6 | %

A5 — Q5: How much do you charge your client for the test?
| N7 | USD

Result   With no carryover, annually you save
**N10_2 days**
You would make
**N20_2 USD more**

**Im22**

# FIG. 5

```
              ┌─────────────┐
              │    Start     │
              └──────┬──────┘
                     │              ⟋S1
        ┌────────────▼────────────┐
        │     Acquire N1 to N7     │
        └────────────┬────────────┘
                     │              ⟋S2
        ┌────────────▼────────────┐
        │ Calculate N10 based on   │
        │        N1 to N6          │
        └────────────┬────────────┘
                     │              ⟋S3
        ┌────────────▼────────────┐
        │   Calculate N20 based on │
        │     N10, N4, N5 and N7   │
        └────────────┬────────────┘
                     │              ⟋S5
        ┌────────────▼────────────┐
        │      Acquire N2_2        │
        └────────────┬────────────┘
                     │              ⟋S6
        ┌────────────▼────────────┐
        │  Calculate N10_2 based on│
        │   N1, N2_2, N4, N5 and N6│
        └────────────┬────────────┘
                     │              ⟋S7
        ┌────────────▼────────────┐
        │  Calculate N20_2 based on│
        │  N10_2, N4, N5 and N7_2  │
        └────────────┬────────────┘
                     │              ⟋S8
        ┌────────────▼────────────┐
        │ Display N10, N10_2, N20  │
        │       and N20_2          │
        └────────────┬────────────┘
                     │
              ┌──────▼──────┐
              │     End      │
              └─────────────┘
```

Europäisches
Patentamt

European
Patent Office

Office européen
des brevets

## EUROPEAN SEARCH REPORT

**Application Number**

EP 24 20 6012

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHHATRE S ET AL: "A decision-support model for evaluating changes in biopharmaceutical manufacturing processes", BIOPROCESS AND BIOSYSTEMS ENGINEERING, SPRINGER, BERLIN, DE, vol. 30, no. 1, 9 November 2006 (2006-11-09), pages 1-11, XP019474232, ISSN: 1615-7605, DOI: 10.1007/S00449-006-0086-8 * abstract * * "Process change strategies"; page 4; figure 1 * * "Manufacturing model", "Development model"; page 5; table 2 * | 1-12 | INV. G01N30/88 |
| X | FELINGER ATTILA ET AL: "Optimizing experimental conditions for minimum production cost in preparative chromatography", AICHE JOURNAL, vol. 40, no. 4, 1 April 1994 (1994-04-01), pages 594-605, XP093251829, US ISSN: 0001-1541, DOI: 10.1002/aic.690400404 * abstract * * page 594, right-hand column, paragraph 2 - page 595, left-hand column, paragraph 1 * * "Optimization for maximum specific production"; page 597, right-hand column - page 600, left-hand column, paragraph 1 * * "Conclusion"; page 602, right-hand column * | 1-12 | **TECHNICAL FIELDS SEARCHED (IPC)** G01N |

-/--

The present search report has been drawn up for all claims

| Place of search | Date of completion of the search | Examiner |
|---|---|---|
| Munich | 24 February 2025 | Meltaus, Johanna |

EPO FORM 1503 03.82 (P04C01)

Europäisches
Patentamt

European
Patent Office

Office européen
des brevets

# EUROPEAN SEARCH REPORT

Application Number

EP 24 20 6012

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Pollard David ET AL: "Standardized Economic Cost Modeling for Next-Generation MAb Production", , 15 September 2016 (2016-09-15), pages 1-21, XP093201057, Retrieved from the Internet: URL:https://www.bioprocessintl.com/economics/standardized-economic-cost-modeling-for-next-generation-mab-production [retrieved on 2025-02-18] * page 2, paragraph 2 - page 3, last paragraph * * page 6, paragraph 2-3 * | 1-12 | |

-----

**TECHNICAL FIELDS SEARCHED (IPC)**

The present search report has been drawn up for all claims

| Place of search | Date of completion of the search | Examiner |
|---|---|---|
| Munich | 24 February 2025 | Meltaus, Johanna |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.................................................................................................
& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023177450 A

- JP 2023044723 A